# EUROPÄISCHE PATENTSCHRIFT

(11) **EP 1 053 922 B1**
(45) Veröffentlichungstag und Bekanntmachung des Hinweises auf die Patenterteilung: **14.04.2004**
(21) Anmeldenummer: 00104051.8
(22) Anmeldetag: 26.02.2000
(51) Int. Cl.: B60S 1/50, C02F 5/08

(54) **Vorrichtung zur Waschwasserenthärtung**
Wash water softening device
Dispositif pour adoucir l'eau de lavage

(30) Priorität: 15.05.1999 DE 19922535
(43) Veröffentlichungstag der Anmeldung: 22.11.2000
(73) Patentinhaber: Siemens Aktiengesellschaft, 80333 München (DE)
(72) Erfinder: Seyfarth, Lutz, 37276 Meinhard (DE); Rehs, Andreas, 36199 Rotenburg (DE)

(56) Entgegenhaltungen:
- EP-A- 0 855 164
- EP-A- 0 900 765
- DE-A- 1 517 467
- GB-A- 2 213 444
- US-A- 2 770 017
- US-A- 4 565 019
- US-A- 5 138 778

## Beschreibung

Die Erfindung betrifft eine Vorrichtung zur Waschwasserenthärtung von Scheibenreinigungsanlagen für Kraftfahrzeuge nach dem Oberbegriff des Anspruchs 1.

Bei herkömmlichen Scheibenreinigungsanlagen (auch Streuscheibenreinigungsanlagen) für Kraftfahrzeuge setzt sich die Reinigungsflüssigkeit in der Regel aus nicht-enthärtetem Leitungswasser und mehreren Zusätzen zusammen, wie beispielsweise Frostschutzmittel (meist auf Alkoholbasis) und Waschkonzentraten, die waschaktive Substanzen wie Seifen oder Tenside enthalten. Die Wasserhärte beruht im Wesentlichen auf natürlicherweise im Wasser enthaltenen Kalzium- und Magnesiumkarbonationen, die die sogenannte Karbonathärte bilden. Ein weiterer Härtebildner ist beispielweise Kalziumsulfat. Die Wasserhärte (Gesamthärte) schwankt regional und lokal stark und liegt im Bereich von etwa 7 - 8 °dH (Grad deutscher Härte) bis größer 20°dH.

Wenn das Wasser auf die zu reinigende Scheibe aufgebracht wird und dabei Restmengen an der Fahrzeugkarosserie oder an anderen Bauteilen verbleiben und dort trocknen, entstehen unansehnliche Rückstände in Form von sogenannten Kalkflecken oder sogar feste Krusten, die eventuell die Waschdüsenöffnungen verstopfen und damit letztlich zum Ausfall der Scheibenreinigungsanlage führen können. Derartige Rückstände werden auch nicht vermieden, wenn dem Waschwasser waschaktive Substanzen zugesetzt sind, da diese im Zusammenwirken mit dem kalkhaltigen Wasser Kalkseifen in Form von Ausflockungen oder wachsartigen Schollen bilden, die ebenfalls als unerwünschte Rückstände an der Karosserie und auch im Waschflüssigkeitsbehälter verbleiben. Diese Ablagerungen entstehen bevorzugt bei beheizten Scheibenreinigungsanlagen, wenn das im Wasser gelöste Kohlendioxid durch Erhitzen ausgetrieben und dadurch das Lösungsgleichgewicht der Karbonationen so verschoben wird, daß Kalk ausfällt. Auch der dem Frostschutzmitteln beigemischte Alkohol wirkt sich in dieser Hinsicht nicht positiv aus. Ausfallen von Kalk und Salzablagerungen sind also negative Begleiterscheinungen an herkömmlichen Scheiben- bzw. Streuscheibenreinigungsanlagen.

Der vorliegenden Erfindung liegt daher die Aufgabe zugrunde, eine Vorrichtung zur Waschwasserenthärtung von Scheibenreinigungsanlagen für Kraftfahrzeuge anzugeben, die im Waschflüssigkeitsbehälter der Scheibenreinigungsanlage integriert ist und diese kostengünstig mit enthärtetem Wasser versorgt.

Die vorstehende Aufgabe wird erfindungsgemäß dadurch gelöst, daß der Waschflüssigkeitsbehälter mindestens ein Depot mit einem Mittel zur Wasserenthärtung aufweist, wobei das Depot im Einfüllrohr und/oder in einem Zwischenreservoir des Waschflüssigkeitsbehälters angeordnet ist. Das Mittel zur Wasserenthärtung sorgt dafür, daß die Härtebildner im Wasser vollständig entfernt werden. Das Mittel zur Wasserenthärtung wird jedoch von anderen Stoffen als Wasser, die ebenfalls in den Waschflüssigkeitsbehälter der Scheiben- oder Streuscheibenreinigungsanlage eingefüllt werden, geschädigt und dadurch irreversibel unwirksam gemacht. Die Waschadditive müssen also möglichst vom Mittel zur Wasserenthärtung ferngehalten werden. Dies wird dadurch erreicht, daß das Depot für das Mittel zur Wasserenthärtung im Einfüllrohr und/oder in einem Zwischenreservoir des Waschflüssigkeitsbehälters angeordnet ist, wobei sowohl ein einziges für das Befüllen mit Wasser und mit Waschadditiven unterteiltes Einfüllrohr, als auch zwei getrennte Einfüllrohre vorgesehen sein können. Es können auch mehrere Depots eingesetzt werden, die nacheinander im Einfüllrohr oder auch alternativ oder zusätzlich in einem Zwischenreservoir im Waschflüssigkeitsbehälter plaziert sind. Das Zwischenreservoir ist dabei mit dem Hauptreservoir des Waschflüssigkeitsbehälters auf eine Weise verbunden, die eine Beeinträchtigung der Funktionsweise des Depots für das Mittel zur Waschwasserenthärtung durch die Waschadditive verhindert. Nachdem das Wasser das Depot mit dem Mittel zur Waschwasserenthärtung passiert hat und dadurch von Härtebildner befreit wurde, bilden sich beim Abtrocknen des Waschwassers bzw. des Waschflüssigkeitsgemisches keine Flecken mehr. Weiterhin werden Ablagerungen und infolgedessen Verstopfungen an der Düse bzw. der kompletten Reinigungsanlage vermieden. Bei einer Anordnung eines Depots mit dem Mittel zur Wasserenthärtung im Einfüllrohr des Waschflüssigkeitsbehälters kann es zweckmäßig sein, wenn das enthärtete Wasser zunächst in ein Zwischenreservoir im Waschflüssigkeitsbehälter gelangt. Die äußeren Abmessungen des Waschflüssigkeitsbehälters können dadurch beibehalten werden und es ist für eine gewisse Bevorratung des enthärteten Wassers gesorgt. Zusätzlich kann ein zweites Depot mit dem Mittel zur Wasserenthärtung in dem Zwischenreservoir angeordnet sein.

Besonders einfach ist die erfindungsgemäße Vorrichtung aufgebaut, wenn das Depot im Einfüllrohr des Waschflüssigkeitsbehälter angeordnet ist. Gegebenenfalls ist auch das vorteilhafte Zwischenreservoir im Bereich des Einfüllrohres plaziert.

Vorteilhafte Weiterbildung der Erfindung sind in den Ansprüchen 2 bis 7 aufgeführt.

Zweckmäßigerweise weist das Einfüllrohr des Waschflüssigkeitsbehälters eine Kennzeichnung auf, die dem Benutzer zeigt wo genau das Befüllen des Behälters mit Wasser und anderen Waschadditiven zu erfolgen hat. Damit können Fehler beim Befüllen des Waschflüssigkeitsbehälters vermieden werden.

Es hat sich weiterhin als vorteilhaft erwiesen, das Depot mit dem Mittel zur Wasserenthärtung als Sieb auszugestalten, was einerseits das Mittel zur Wasserenthärtung sicher im Depot hält, aber andererseits einen leichten Durchfluß für das Wasser zuläßt. Anstelle eines Siebes können auch durchlässige, textile Filtersäcke als Aufnahme für das Depot mit dem Mittel zur Wasserenthärtung dienen.

Besonders vorteilhaft und in der Handhabung sehr einfach ist das Mittel zur Wasserenthärtung, wenn dies ein Ionenaustauscher in Form eines Kunstharzgranulates ist. Derartige Kunstharzgranulate sind an ihrer Oberfläche mit einer chemischen Substanz belegt, die Kationen binden bzw. austauschen kann. Die im Wasser enthaltenen Kationen (in der Hauptsache Kalzium- und Magnesiumkationen) werden je nach Typ des Ionenaustauscherharzes gegen Wasserstoffionen oder auch Natriumionen ausgetauscht. Meist liegt das Kunstharzgranulat in einer groben Körnung von etwa 0,5 - 3 mm vor. Die handelsüblichen lonenaustauscherharze sind regenerierbar. Dies ist auch bei der erfindungsgemäßen Vorrichtung zur Wasserenthärtung von Vorteil, da bei einem Verbrauch der Kapazität des Ionenaustauschers dieser nicht durch einen Neukauf, sondern durch kostengünstiges Regenerieren wieder einsatzfähig gemacht werden kann.

Wenn das Mittel zur Wasserenthärtung, bzw. der Ionenaustauscher in Form eines Kunststoffgranulates, nicht mehr funktionstüchtig ist, ist es zweckmäßig dies beispielsweise anhand einer Leitfähigkeitsmessung des enthärteten Wasser festzustellen (bei hoher Wirksamkeit des Mittels zur Wasserenthärtung ist die Leitfähigkeit des enthärteten Wasser sehr gering). Das Signal einer entsprechenden Leitfähigkeitsmeßsonde kann überdies mit einer Warnleuchte im Cockpit des Kraftfahrzeugs verbunden sein und so den Fahrer von der Notwendigkeit eines Austauschs des Mittels zur Wasserenthärtung oder dessen Regenerierungsbedarf in Kenntnis setzen.

Eine andere einfache Methode zur Feststellung ob das Mittel zur Wasserenthärtung noch richtig funktioniert, besteht darin, den bei Ionenaustauscherharzen üblichen Farbumschlag bei Verbrauch der Austauschkapazität optisch zu erfassen. Dies kann in einfachster Weise mit einem Schauglas geschehen, das am Depot mit dem Mittel zur Wasserenthärtung angebracht ist.

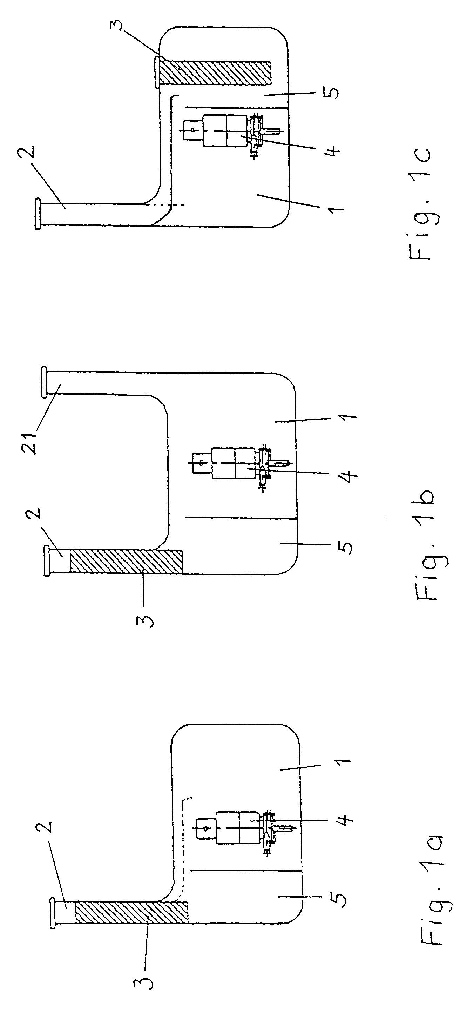

Nachfolgend wird die Erfindung anhand eines Ausführungsbeispiels mit Zeichnungen näher erläutert. Dabei zeigen die Figuren 1a, 1b und 1c jeweils einen schematisch Aufbau der erfindungsgemäßen Vorrichtung zur Wasserenthärtung.

In Figur 1a weist der Waschflüssigkeitsbehälter 1 ein Einfüllrohr 2 auf, in das das Depot 3 für das Mittel zur Wasserenthärtung, hier ein lonentauscher-Granulat, als herausnehmbare Kartusche eingesetzt ist. Das Einfüllrohr 2 weist eine Unterteilung mit einer in der Figur nicht dargestellten Kennzeichnung für die Zugabe von Waschwasser und von Waschadditiven auf. Im Hauptreservoir des Waschflüssigkeitsbehälters 1 ist weiterhin eine Pumpe 4 eingebaut, die die Waschflüssigkeit aus dem Behälter über ein Schlauchsystem zu den auf die zu reinigenden Scheiben gerichteten Waschdüsen fördert. Wenn das Wasser durch das Ionenaustauscher-Granulat hindurchgelaufen ist, gelangt es zunächst in ein Zwischenreservoir 5 mit Überlauf zum Hauptbehälter 1. In dem Zwischenreservoir 5 kann eine Leitfähigkeitsmeßsonde angeordnet sein, die anhand des elektrischen Leitwertes des enthärteten Wassers die Funktionstüchtigkeit des Ionenaustauschers erfasst.

Figur 1b zeigt gegenüber der Vorrichtung in Figur 1a lediglich einen Waschflüssigkeitsbehälter 1 mit zwei getrennten Einfüllrohren 2, 21 für das Waschwasser und die Waschadditive. Hierdurch ist die Gefahr eines unsachgemäßen Befüllens des Behälters weiter reduziert.

Im Beispiel gemäß Figur 1c ist der Waschflüssigkeitsbehälter 1 wie in Figur 1a mit einem Einfüllrohr 2 versehen. Das Depot 3 für den Ionenaustauscher ist jedoch nicht im Einfüllrohr 2 angeordnet, sondern im Zwischenreservoir 5, das innerhalb des Hauptbehälters 1 für die Waschflüssigkeit gelegen ist. Bei diesem Aufbau verbleibt das durch den Ionenaustauscher enthärtete Wasser zunächst im Kontakt mit diesem, was eine längere Einwirkzeit zur Folge hat und den Austauschprozeß effizienter gestaltet. Über einen geregelten Überlauf oder über eine zusätzliche Pumpe wird das enthärtete Wasser in den Hauptbehälter 1 zur Vermischung mit den Waschadditiven überführt.

## Patentansprüche

1. Vorrichtung zur Waschwasserenthärtung von Scheibenreinigungsanlagen für Kraftfahrzeuge mit einem Waschflüssigkeitsbehälter zur Aufnahme von Waschwasser und Waschadditiven, **dadurch gekennzeichnet, daß** der Waschflüssigkeitsbehälter (1) mindestens ein Depot (3) mit einem Mittel zur Wasserenthärtung aufweist, wobei das Depot (3) im Einfüllrohr (2, 21) und/oder in einem Zwischenreservoir (5) des Waschflüssigkeitsbehälters (1) angeordnet ist.

2. Vorrichtung zur Waschwasserenthärtung nach Anspruch 1, **dadurch gekennzeichnet, daß** der Waschflüssigkeitsbehälter (1) eine Kennzeichnung für den Einfüllort von Waschwasser und von Waschadditiven aufweist.

3. Vorrichtung zur Waschwasserenthärtung nach Anspruch 1 oder 2, **dadurch gekennzeichnet, daß** das Depot (3) in Form eines Siebes ausgestaltet ist.

4. Vorrichtung zur Waschwasserenthärtung nach einem der Ansprüche 1 bis 3, **dadurch gekennzeichnet, daß** das Mittel zur Wasserenthärtung ein Ionenaustauscher in Form eines Kunstharzgranulates ist.

5. Vorrichtung zur Waschwasserenthärtung nach Anspruch 4, **dadurch gekennzeichnet, daß** das Kunstharzgranulat regenerierbar ist.

6. Vorrichtung zur Waschwasserenthärtung nach einem der Ansprüche 1 bis 5, **dadurch gekennzeichnet, daß** das Depot (3) ein Mittel zum Erfassen der Funktionstüchtigkeit des Mittels zur Wasserenthärtung aufweist.

7. Vorrichtung zur Waschwasserenthärtung nach Anspruch 6, **dadurch gekennzeichnet, daß** das Mittel zum Erfassen der Funktionstüchtigkeit des Mittels zur Wasserenthärtung eine Leitfähigkeitsmeßsonde oder ein optisch erfaßbarer Farbumschlag ist.

## Claims

1. Device for the softening of washing water in screen cleaning systems for motor vehicles, with a washing-fluid container for receiving washing water and washing additives, **characterized in that** the washing-fluid container (1) has at least one repository (3) with an agent for water softening, the repository (3) being arranged in the filling pipe (2, 21) and/or in an intermediate reservoir (5) of the washing-fluid container (1).

2. Device for the softening of washing water according to Claim 1, **characterized in that** the washing-fluid container (1) has a marking for the filling location for washing water and for washing additives.

3. Device for the softening of washing water according to Claim 1 or 2, **characterized in that** the repository (3) is designed in the form of a sieve.

4. Device for the softening of washing water according to one of Claims 1 to 3, **characterized in that** the agent for water softening is an ion exchanger in the form of a synthetic resin granulate.

5. Device for the softening of washing water according to Claim 4, **characterized in that** the synthetic resin granulate is regeneratable.

6. Device for the softening of washing water according to one of Claims 1 to 5, **characterized in that** the repository (3) has a means for detecting the functioning capacity of the agent for water softening.

7. Device for the softening of washing water according to Claim 6, **characterized in that** the means for detecting the functioning capacity of the agent for water softening is a conductivity measurement probe or a visually detectable colour change.

## Revendications

1. Dispositif destiné à adoucir l'eau de lavage de systèmes de nettoyage des vitres sur véhicules automobiles, ayant un récipient pour le liquide de nettoyage destiné à recevoir l'eau de lavage et les additifs de lavage **caractérisé par le fait que** le récipient pour le liquide de nettoyage (1) comporte au moins une cartouche (3) renfermant un produit destiné à adoucir l'eau, la cartouche (3) étant disposée dans le tube de remplissage (2, 21) et/ou dans un réservoir intermédiaire (5) du récipient à liquide de nettoyage (1).

2. Dispositif destiné à adoucir l'eau de lavage selon la revendication 1 **caractérisé par le fait que** le récipient à liquide de nettoyage (1) comporte un marquage pour indiquer l'endroit où il faut remplir l'eau de lavage et les additifs de lavage.

3. Dispositif destiné à adoucir l'eau de lavage selon la revendication 1 ou 2 **caractérisé par le fait que** la cartouche (3) est conçue sous la forme d'un tamis.

4. Dispositif destiné à adoucir l'eau de lavage selon la revendication 1 à 3 **caractérisé par le fait que** le produit destiné à adoucir l'eau est un échangeur d'ions sous la forme de granulés de résine synthétique.

5. Dispositif destiné à adoucir l'eau de lavage selon la revendication 4 **caractérisé par le fait que** le granulé de résine synthétique peut être régénéré.

6. Dispositif destiné à adoucir l'eau de lavage selon la revendication 1 à 5 **caractérisé par le fait que** la cartouche (3) comporte un moyen permettant de détecter l'efficacité du produit destiné à adoucir l'eau.

7. Dispositif destiné à adoucir l'eau de lavage selon la revendication 6 **caractérisé par le fait que** le moyen permettant de détecter l'efficacité du produit destiné à adoucir l'eau est une sonde de mesure de la conductivité ou un virage de teinte pouvant être constaté optiquement.
